# EUROPEAN PATENT APPLICATION

(11) **EP 4 842 076 A1**
(43) Date of publication of application: **18.11.2026**
(21) Application number: 24916070.6
(22) Date of filing: 12.01.2024
(51) Int. Cl.: H04W 52/02

(54) **DEVICE WAKE-UP METHODS AND APPARATUSES, AND DEVICES, STORAGE MEDIUM AND CHIP**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: Taor, Simon Edward William
(86) International application number: PCT/CN2024/071998
(87) International publication number: WO 2025/148001

(57) **Abstract**

A method and apparatus for device wake-up, a device, a storage medium, and a chip are provided, which belong to the field of mobile communication technologies. The method is performed by an internet of things (IoT) device, and the method includes the following. A wake-up signal (WUS) is received via a wake-up receiver of the IoT device, where the WUS contains an operation command (401). A main transceiver of the IoT device is woken up (402). The operation command is forwarded to the main transceiver, so that the main transceiver executes the operation command (403).

## Description

### TECHNICAL FIELD

This disclosure relates to the field of mobile communication technologies, in particular to a method and apparatus for device wake-up, a device, a storage medium, and a chip.

### BACKGROUND

With the continuous development of mobile communication technologies, ambient power-enabled internet of things (IoT) communication technologies are also developing rapidly.

In the related art, an ambient power-enabled IoT device relies on harvesting ambient energy to provide energy required for operation in its own circuitry and for information exchange with the outside. After receiving a wake-up signal (WUS), the IoT device is woken up and then selects an appropriate time to send data to a reader.

### SUMMARY

A method and apparatus for device wake-up, a device, a storage medium, and a chip are provided in embodiments of the disclosure. The technical solutions are as follows.

In an aspect, a method for device wake-up is provided in embodiments of the disclosure. The method is performed by an internet of things (IoT) device, and the method includes the following. A wake-up signal (WUS) is received via a wake-up receiver of the IoT device, where the WUS contains an operation command. A main transceiver of the IoT device is woken up. The operation command is forwarded to the main transceiver, so that the main transceiver executes the operation command.

In an aspect, a method for device wake-up is provided in embodiments of the disclosure. The method is performed by a reading device, and the method includes the following. A WUS is sent to an IoT device, where the WUS is received by the IoT device via a wake-up receiver, and the WUS contains an operation command, so that the IoT device wakes up a main transceiver of the IoT device and forwards the operation command to the main transceiver for execution of the operation command.

In another aspect, an apparatus for device wake-up is provided in embodiments of the disclosure. The apparatus includes a receiving module, a wake-up module, and a forwarding module. The receiving module is configured to receive, via a wake-up receiver of the IoT device, a WUS, where the WUS contains an operation command. The wake-up module is configured to wake up a main transceiver of the IoT device. The forwarding module is configured to forward the operation command to the main transceiver, so that the main transceiver executes the operation command.

In another aspect, an apparatus for device wake-up is provided in embodiments of the disclosure. The apparatus includes a sending module. The sending module is configured to send a WUS to an IoT device, where the WUS is received by the IoT device via a wake-up receiver, and the WUS contains an operation command, so that the IoT device wakes up a main transceiver of the IoT device and forwards the operation command to the main transceiver for execution of the operation command.

In another aspect, an ambient power-enabled IoT (ambient IoT) device is provided in embodiments of the disclosure. The ambient IoT device includes a processor, a memory, and a transceiver. The memory is configured to store a computer program. The processor is configured to execute the computer program, to cause the ambient IoT device to implement the method for device wake-up.

In another aspect, a reading device is provided in embodiments of the disclosure. The reading device includes a processor, a memory, and a transceiver. The memory is configured to store a computer program. The processor is configured to execute the computer program, to cause the reading device to implement the method for device wake-up.

In yet another aspect, a computer-readable storage medium is further provided in embodiments of the disclosure. The computer-readable storage medium is configured to store a computer program, and the computer program is loaded and executed by a processor to implement the method for device wake-up.

In yet another aspect, a chip is further provided in the disclosure. The chip is configured to execute in a communication device, to cause the communication device to perform the method for device wake-up.

In yet another aspect, a computer program product is provided in the disclosure. The computer program product includes computer instructions stored in a computer-readable storage medium. A processor of a communication device is configured to read the computer instructions from the computer-readable storage medium and execute the computer instructions, to cause the communication device to perform the method for device wake-up.

In yet another aspect, a computer program is provided in the disclosure. The computer program is executed by a processor of a communication device, to implement the method for device wake-up.

A solution for waking up an IoT device is provided in embodiments of the disclosure. The IoT device can wake up the main transceiver of the IoT device through the WUS sent by the reading device, and send the operation command in the WUS to the main transceiver of the IoT device, so that the main transceiver can directly execute the operation command. In this way, the method for waking up an IoT device can be extended, so that the main transceiver can execute the operation command immediately after being woken up, thereby improving the efficiency of command execution by the IoT device.

### BRIEF DESCRIPTION OF THE DRAWINGS

To illustrate technical solutions of embodiments of the disclosure more clearly, the following will give a brief introduction to accompanying drawings used for elaborating the embodiments. Apparently, the accompanying drawings mentioned below are some embodiments of the disclosure. Based on these drawings, those of ordinary skill in the art can also obtain other drawings without creative effort.
FIG. 1 is a schematic architectural diagram of a communication system provided in an embodiment of the disclosure.
FIG. 2 is a schematic diagram illustrating zero-power communication involved in the disclosure.
FIG. 3 is a schematic diagram illustrating an operation mode of a wireless internet of things (IoT) system using electromagnetic energy harvesting involved in the disclosure.
FIG. 4 is a flowchart illustrating a method for device wake-up provided in an embodiment of the disclosure.
FIG. 5 is a flowchart illustrating a method for device wake-up provided in an embodiment of the disclosure.
FIG. 6 is a flowchart illustrating a method for device wake-up provided in an embodiment of the disclosure.
FIG. 7 is a schematic structural diagram of a wake-up sequence involved in an embodiment of the disclosure.
FIG. 8 is a schematic diagram illustrating a process in which a reader wakes up a device and forwards data involved in an embodiment of the disclosure.
FIG. 9 is a block diagram of an apparatus for device wake-up provided in an embodiment of the disclosure.
FIG. 10 is a block diagram of an apparatus for device wake-up provided in an embodiment of the disclosure.
FIG. 11 is a schematic structural diagram of a communication device provided in an embodiment of the disclosure.

### DETAILED DESCRIPTION

To make the objectives, technical solutions, and advantages of the disclosure clearer, embodiments of the disclosure will be further elaborated below with reference to the accompanying drawings.

The network architecture and service scenario mentioned in embodiments of the disclosure are intended to illustrate the technical solutions of embodiments of the disclosure more clearly, and do not constitute a limitation on the technical solutions provided in embodiments of the disclosure. Those of ordinary skill in the art can appreciate that, with the evolution of network architectures and the emergence of new service scenarios, for similar technical problems, the technical solutions provided in embodiments of the disclosure are also applicable.

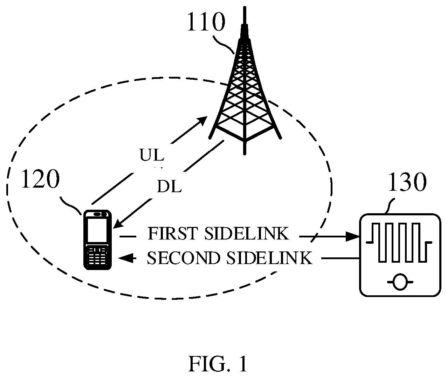

FIG. 1 illustrates a schematic diagram of a communication system involved in an exemplary embodiment of the disclosure. The communication system includes a network device 110, a terminal device 120, and an ambient power-enabled internet of things (IoT) device 130, which is not limited in the disclosure.

The network device 110 in the disclosure provides wireless communication functions. The network device 110 includes but not limited to: an evolved node B (eNB), a radio network controller (RNC), a node B (NB), a base station controller (BSC), a base transceiver station (BTS), a home base station (e.g., a home evolved node B, or a home node B (HNB)), a baseband unit (BBU), an access point (AP) in a wireless fidelity (Wi-Fi) system, a wireless relay node, a wireless backhaul node, a transmission point (TP), a transmission and reception point (TRP), etc. It may also be a next generation node B (gNB) or a transmission point (a TRP or a TP) in a 5th generation (5G) mobile communication system, or an antenna panel or a set of antenna panels( including multiple antenna panels) of a base station in the 5G system, or a network node constituting a gNB or a transmission point, such as a baseband unit (BBU) or a distributed unit (DU), etc., or a base station in a beyond 5th generation (B5G) mobile communication system, a 6th generation (6G) mobile communication system, etc., or a core network (CN), a fronthaul, a backhaul, a radio access network (RAN), a network slice, etc., or a serving cell, a primary cell (PCell), a primary secondary cell (PSCell), a special Cell (SpCell), a secondary cell (SCell), a neighboring cell, etc., of a terminal device.

The terminal device 120 in the disclosure, also known as a user equipment (UE), an access terminal, a user unit, a user station, a mobile station, a mobile platform, a remote station, a remote terminal, a mobile device, a user terminal, a terminal, a wireless communication device, a user agent, a user apparatus. The terminal includes but is not limited to: a handheld device, a wearable device, an in-vehicle device, an Internet of things (IoT) device, etc., such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal (e.g., smart TVs, routers, smart speakers, etc.) in smart home, a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE), etc.

The network device 110 and the terminal device 120 communicate with each other using a certain air interface technology, such as a Uu interface.

Exemplarily, there are two communication scenarios between the network device 110 and the terminal device 120: an uplink (UL) communication scenario and a downlink (DL) communication scenario. The UL communication refers to sending signals to the network device 110. The DL communication refers to sending signals to the terminal device 120.

The terminal device 120 and other terminal devices can communicate with one another using a certain air interface technology, such as a PC5 interface.

In some embodiments, there are two communication scenarios between the terminal device 120 and other terminal devices: a first sidelink communication scenario and a second sidelink communication scenario. The first sidelink communication refers to sending signals to other terminal devices. The second sidelink communication refers to sending signals to the terminal device 120.

Both the terminal device 120 and other terminal devices are within a network coverage and located in the same cell, or both the terminal device 120 and other terminal devices are within the network coverage but located in different cells, or the terminal device 120 is within the network coverage and other terminal devices are outside the network coverage.

The ambient power-enabled IoT device 130 is a radio frequency identification (RFID)-based zero-power device.

An ambient power-enabled IoT device refers to a device that utilizes various ambient energies, such as radio frequency (RF), light energy, solar energy, thermal energy, mechanical energy, etc. Such a device may have no energy storage capability, or may have very limited energy storage capability (such as use of a capacitor with a capacity of tens of microfarads (µF)).

In some embodiments, the ambient power-enabled IoT device can also be referred to as an ambient power-enabled IoT (AMP IoT), or ambient IoT for short.

The technical solutions provided in embodiments of the disclosure may be applied to various communication systems, such as: a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a Wi-Fi system, a cellular IoT system, a cellular passive IoT system, and may also be applied to subsequent evolution systems of a 5G NR system, and may also be applied to B5G, 6G, and subsequent evolution systems. In some embodiments of the disclosure, "NR" may also be referred to as a 5G NR system or a 5G system. Among them, the 5G mobile communication system may include non-standalone (NSA) and/or standalone (SA).

The technical solutions provided in embodiments of the disclosure may also be applied to a machine type communication (MTC), a long term evolution-machine (LTE-M), a device-to-device (D2D) network, a machine-to-machine (M2M) network, an IoT network, or other networks. The IoT network may include, for example, an Internet of vehicles. The communication methods in the Internet of vehicles system are collectively referred to as vehicle to X (V2X, X may represent anything). For example, the V2X may include: vehicle-to-vehicle (V2V) communication, vehicle-to-infrastructure (V2I) communication, vehicle-to-pedestrian (V2P) communication, vehicle-to-network (V2N) communication, etc.

Before introducing the technical solutions of the disclosure, some related technical knowledge involved in the disclosure will be elaborated. The following related art, as an optional scheme, can be arbitrarily combined with the technical solutions of embodiments of the disclosure, which shall all belong to the protection scope of embodiments of the disclosure. Embodiments of the disclosure include at least some of the following.

### 1) Zero-power communication

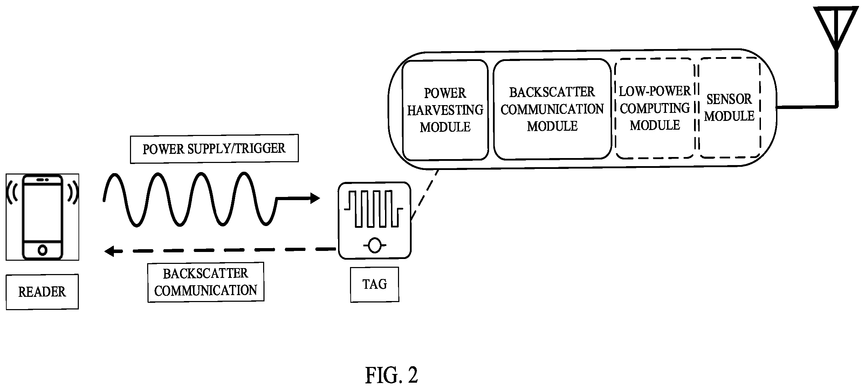

Zero-power communication adopts energy (power) harvesting and backscattering technologies. A zero-power communication network is composed of a network device and a zero-power device, as illustrated in FIG. 2, which is a schematic diagram illustrating zero-power communication involved in the disclosure. The network device is configured to send wireless power-supply signals and downlink communication signals to the zero-power device and receive a backscattered signal from the zero-power device. A basic zero-power device includes a power harvesting module, a backscatter communication module, and a low-power computing module. In addition, the zero-power device can further include a memory or a sensor configured to store some basic information (such as object identity) or to obtain sensor data such as ambient temperature, ambient humidity, etc.

Key technologies of the zero-power communication mainly include RF power harvesting and backscatter communication.

### RF power harvesting

The RF power harvesting module is configured to harvest energy from electromagnetic waves in space based on the electromagnetic induction principle, thereby obtaining the energy required to power the zero-power device, such as for driving a low-power demodulation and a modulation module(s), a sensor(s), memory access, etc. As such, the zero-power device does not need a conventional battery.

### Backscatter Communication

A zero-power communication terminal receives wireless signals sent by a network device, modulates the wireless signals, loads information to be sent, and radiates the modulated signals via an antenna(s). This procedure of information transmission is referred to as backscatter communication. Backscattering is closely related to load modulation. In load modulation, a circuit parameter(s) of an oscillation circuit of a zero-power device is adjusted and controlled according to the clock of a data stream, so that the magnitude and other parameters of the impedance of an electronic tag are changed accordingly, thus completing modulation.

### 2) Classifications of zero-power terminal

Based on the energy source and usage of the zero-power terminal, the zero-power terminal can be divided into the following types.

### a) Passive zero-power terminal

For a zero-power terminal, a built-in battery is not needed. When a zero-power terminal moves close to a network device (e.g., a reader/writer in the RFID system), the zero-power terminal is within a near-field of the radiation of an antenna(s) of the network device. In this case, an antenna(s) of the zero-power terminal generates an induced current through electromagnetic induction, and the induced current drives a low-power chip circuit of the zero-power terminal to perform demodulation of a forward-link signal and modulation of a backward-link signal. For a backward link, the zero-power terminal performs signal transmission through backscattering or active transmission.

It can be seen that, neither a forward link nor a backward link of the passive zero-power terminal requires a built-in battery to drive, which is a truly zero-power terminal.

The passive zero-power terminal does not need a battery and has a simple RF circuit and a simple baseband circuit. For example, the passive zero-power terminal does not need components such as an LNA, a power amplifier (PA), a crystal oscillator, an analog-to-digital converter (ADC), etc., and thus has advantages such as small size, light weight, low price, and long service life.

The passive zero-power terminal can also support other manners for energy harvesting, and obtain energy for a drive circuit by harvesting energy from the environment (e.g., light energy, thermal energy, kinetic energy, mechanical energy, etc.), to support communication of a terminal device.

### b) Semi-passive zero-power terminal

A semi-passive zero-power terminal is not equipped with a conventional battery, but can use an RF power harvesting module to harvest radio wave energy or use the power harvesting module to harvest energy from the environment (such as solar energy, thermal energy, mechanical vibration energy, etc.), and store the harvested energy in a power storage unit (e.g., a capacitor). After the power storage unit obtains energy, a low-power chip circuit of the zero-power terminal can be driven to perform demodulation of a forward-link signal and modulation of a backward-link signal. For a backward link, the zero-power terminal performs signal transmission through backscattering or active transmission.

It can be seen that neither a forward link nor a backward link of the semi-passive zero-power terminal requires a built-in battery to drive. Although the semi-passive zero-power terminal utilizes energy stored in the capacitor during operation, since the energy comes from radio wave energy harvested by the power harvesting module, the semi-passive zero-power terminal is truly a zero-power terminal.

The semi-passive zero-power terminal inherits many advantages of the passive zero-power terminal, and thus has advantages such as small size, light weight, low price, long service life, etc.

### c) Active zero-power terminal

A zero-power terminal applied in some scenarios can also be an active zero-power terminal, and such a terminal can have a built-in battery. The battery is used to drive a low-power chip circuit of the zero-power terminal to perform demodulation of a forward-link signal and modulation of a backward-link signal. However, for a backscatter link, the zero-power terminal performs signal transmission through backscattering or active transmission. Although the active zero-power terminal has a built-in battery, the active zero-power terminal has an extremely low power consumption and complexity, and thus can have a relatively small capacity battery, thereby achieving a relatively low cost and size. The built-in battery can also serve as an energy-storage unit for storing harvested ambient energy by the power harvesting module, thereby enabling a relatively long maintenance cycle or even maintenance-free operation.

The active zero-power terminal has a built-in battery for power supply, to increase a communication range of the zero-power terminal, thereby improving the reliability of communication. Therefore, the active zero-power terminal can be applied in some scenarios with high requirements on communication distance, reading delay, and other aspects.

Some zero-power terminals, such as a semi-passive zero-power terminal or an active zero-power terminal, may have the capability of active transmission, that is, in addition to communication through backscattering in the backward link, the zero-power terminals can also perform communication through active transmission.

### Classification of zero-power devices based on a transmitter type

Similar to service types of other IoT, service types of zero-power IoT are mainly uplink services.

### a) Backscatter-based zero-power device

Such a zero-power device performs uplink data transmission through backscattering. The zero-power device does not have an active transmitter for active transmission, but has only a backscattering transmitter. Therefore, if data transmission is to be performed, the zero-power device needs to be provided with a carrier wave from the network device, and then performs backscattering based on the carrier wave, thereby implementing data transmission.

### b) Active transmitter-based zero-power device

Such a zero-power device performs uplink data transmission by using an active transmitter capable of active transmission. Therefore, when performing data transmission, the zero-power device can transmit data by using the active transmitter of the zero-power device itself without requiring the network device to provide a carrier wave. An active transmitter applicable to the zero-power device can be, for example, an ultra-low-power amplitude shift keying (ASK) transmitter, an ultra-low-power FSK transmitter, etc. Based on current achievement, for the case of transmitting a signal of 100 microwatts (µw) by such a transmitter, overall power consumption can be decreased to 400~600 µw.

### c) Zero-power device having both a backscattering transmitter and an active transmitter

Such a device can support both a backscattering transmitter and an active transmitter. The device can determine, according to different conditions (such as electric quantity and available ambient power source) or based on scheduling by a network device, which signal transmission scheme is to be applied, that is, whether to use a backscattering transmitter or use an active transmitter to perform signal transmission.

### 3) Cellular passive IoT

Cellular IoT is booming, for example, the 3rd generation partnership project (3GPP) has standardized narrow band internet of things (NB-IoT), MTC, reduced capability (RedCap), and other IoT technologies. However, the related art is no longer able to meet the IoT communication requirements in many scenarios. The main examples are as follows.

### Harsh communication environments

In some IoT scenarios, extreme environments such as high temperature, extremely low temperature, high humidity, high pressure, high radiation, or high-speed motion may be encountered. Examples include ultra-high voltage substations, high-speed train tracks, cold regions, industrial production lines, etc. In these scenarios, due to limitations of the operating environment of conventional power supplies, existing IoT terminals cannot operate. Moreover, extreme environments are also unfavorable for IoT maintenance, such as battery replacement.

### Extremely small terminal form requirements

Some IoT communication scenarios, such as food traceability, goods circulation, and smart wearables, require terminals to be extremely small in size for convenient use in such scenarios. For example, IoT terminals used for goods management in circulation are often implemented as electronic tags, which are embedded in product packaging in a very compact form. Another example is lightweight wearable devices, which can improve the user experience while meeting user needs.

### Extremely low-cost IoT communication requirements

Many IoT communication scenarios require a sufficiently low cost of IoT terminals to improve competitiveness compared with other alternative technologies. For example, in logistics or warehousing scenarios, to facilitate the management of a large number of circulating items, IoT terminals can be attached to each item, and communication between the terminal and the logistics network can achieve precise management throughout the entire logistics process and life cycle. These scenarios require the price of the IoT terminals to be sufficiently competitive.

With the increase of 5G industry applications, there are more and more types of connected objects and application scenarios, leading to higher demands on the price and power consumption of communication terminals. The application of battery-free and low-cost passive IoT devices has become a key technology for a cellular IoT, enriching the types and number of 5G network-connected terminals, thereby truly realizing the Internet of Everything.

During standardization discussions, the zero-power IoT can also be referred to as ambient power-enabled AMP IoT, or ambient IoT for short, and can also be referred to as passive IoT in some technical literature. The ambient IoT device can refer to an IoT device that powers itself by utilizing various ambient energies, such as RF energy, light energy, solar energy, thermal energy, mechanical energy, etc. The ambient IoT device may have no energy storage capability, or may have very limited energy storage capability (such as use of a capacitor with a capacity of tens of µF). Compared with other IoT apparatus, the ambient IoT device has many advantages, such as conventional battery-free, maintenance-free, small in size, low in complexity, low in cost, a long service life, etc. As such, the ambient IoT device is widely applicable to various industries, such as logistics, smart warehousing, smart agriculture, energy power, industrial internet, and other vertical industries, and is also applicable to personal applications such as smart wearables, smart homes, etc.

Based on 3GPP SA1 discussions on ambient IoT application scenarios, the ambient IoT can be at least used in the following four types of scenarios: object recognition, such as logistics, management of products in a product line, and management of a supply chain; environmental monitoring, such as monitoring of operating environment, temperature and humidity of natural environment, and toxic gases; positioning, such as indoor positioning, intelligent object search, and positioning of products in a product line; and intelligent control, such as intelligent control of various electrical appliances (switching on/off of an air conditioner and temperature adjustment) in a smart home, and intelligent control of various facilities (automatic pouring and fertilization) in an agricultural greenhouse.

### 4) Ambient power-enabled device (Ambient IoT)

In an NR system and a Wi-Fi system, a battery-free and low-cost device can support low-cost and large-scale deployment and maintenance-free operation of IoT devices. Currently, the standard is studying how to support ambient IoT devices, also referred to as ambient IoT devices or AMP IoT devices, in the NR system and the Wi-Fi system. The energy required for their operation comes from harvesting of ambient energy, and sources of the ambient energy include wireless signals, solar energy, thermal energy, etc. Such devices are similar to passive devices or semi-passive devices in zero-power communication.

A research project on Ambient IoT devices was carried out in the RAN of the 3GPP. The Ambient IoT devices are roughly classified into the following three types: device A, device B, and device C, and each type of device has corresponding complexity and communication capabilities.

Device A: no energy storage, no independent signal transmission, i.e., backscattering transmission.

Device B: has energy storage, no independent signal transmission, i.e., backscattering transmission. Use of stored energy can include amplification for backscattered signals.

Device C: has energy storage, has independent signal transmission, i.e., active transmission.

The device A has the lowest complexity and power consumption, and the power consumption of which may be as low as 1 µw, but its communication distance is limited, generally only a few meters. The device A requires the network device to provide carrier signals for backscattering transmission. The device C generally has a relatively large-capacity capacitor to store the ambient energy, the power consumption of which may be several hundred µw, and can support active signal transmission, and has a relatively large communication distance. Because the device C can perform active transmission, it does not require the network device to provide the carrier signals. The complexity and power consumption of the device B are between those of the device A and the device C.

In addition, ambient energy harvesting supported by the zero-power terminal may also have many types, such as wireless RF, solar energy, thermal energy, mechanical energy, etc. The zero-power terminal based on wireless RF energy harvesting may require the network to provide wireless RF power-supply signals.

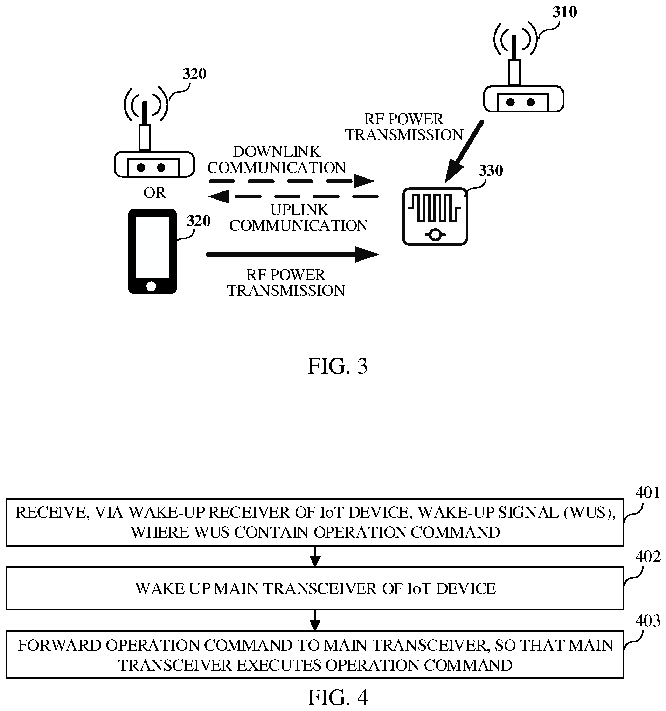

Reference may be made to FIG. 3, which is a schematic diagram illustrating an operation mode of a wireless IoT system using electromagnetic energy harvesting involved in the disclosure.

A power supplier 310, as an optional device, is deployed in a scenario where RF power emitted by a controller is insufficient. In this case, an interaction between a controller 320 and an IoT device 330 is primarily communication (control signaling and data transmission). Frequencies of electromagnetic waves used in communication may be the same as or different from frequencies of electromagnetic waves used for RF power transmission. Due to compliance requirements in the field of electromagnetic radiation safety, the transmission power of the controller 320 and the transmission power of the power supplier 310 cannot be increased indefinitely and need to meet regulatory limits and requirements.

For an IoT system that can harvest energy from electromagnetic waves, since propagation characteristics of electromagnetic waves determine that the electromagnetic waves may attenuate as propagation distances increase, obstacles in the deployment environment, such as walls, surrounding objects, etc., may also cause penetration loss and losses caused by refraction, reflection, and scattering of the electromagnetic waves. As a result, IoT devices based on ambient energy harvesting deployed at different locations may experience different energy losses in electromagnetic wave propagation due to different paths between their respective locations and the relatively fixed controller and power supplier. Consequently, both their energy harvesting efficiency and the minimum uplink transmission power required to ensure reliable signal transmission to the controller (to overcome path loss effects) differ across devices.

As mentioned above, three possible IoT operating scenarios are analyzed.

### 1. IoT devices with sufficient or relatively sufficient power supply

Connected to mains electricity. In this case, the devices can operate continuously without the need to prioritize energy saving.

The devices have a built-in battery with a relatively large capacity, e.g., NB-IoT technology. Such devices can operate according to their designed operating mode throughout their lifecycle (e.g., operating at a relatively low duty-cycle to save energy and prolong battery lifespan) without the need to harvest ambient energy.

2. IoT devices have no energy storage apparatus and rely on a reader/energy supplier to provide sufficient energy for real-time communication, and a typical example is a passive RFID tag. In this case, only when the reader/energy supplier starts to transmit electromagnetic waves (typically continuous waves) for energy supply can circuits of the devices obtain energy and start operating. The operating distance is short (related to transmission power, an antenna gain, reception sensitivity of the reader, as well as power consumption of the circuit of the tag and an antenna gain and reception sensitivity of the tag, typically on an order of about 10 meters). No long-term energy accumulation process is needed. Upon receiving power-supply electromagnetic waves emitted by the reader/energy supplier, the devices can immediately activate their circuits to operate. Devices outside the coverage area do not operate (they are in a dormant state).

3. Between scenario 1 and scenario 2: IoT devices are not connected to a reliable power source but is equipped with a limited-capacity energy storage device (e.g., small-sized storage capacitor or small-capacity rechargeable battery). The devices are located relatively far from the reader, and the reader/controller has a limited transmission power (may be less restrictive in industrial application scenarios) due to laws and regulations, making it difficult to increase the range or power level of wireless power supply. Consequently, the RF power emitted by the reader is insufficient to support real-time reading/writing, requiring reliance on ambient energy harvested in advance for storage. One possible operating scenario is where devices such as sensors have relatively long communication distances, and their actual operating characteristics determine that frequent reading/writing is unnecessary. In this case, the devices are allowed to accumulate energy over a relatively long period to support information exchange on a cycle of hours or days, or information transmission triggered by occasional events.

### 5) Reader/interrogator

### a) Reader

A reader is a device used to read information from passive tags with which the reader communicates. A passive tag is an RFID tag without a built-in battery. The passive tag communicates with the reader by receiving RFID signals emitted by the reader and replying with corresponding information. The main function(s) of the reader is to activate the passive tag, read information embedded in the tag, and then transmit the information to related systems or networks. In ambient-powered scenarios, the reader typically needs to be designed to communicate effectively with low-power passive sensor devices.

### b) Interrogator

An interrogator is a device that issues a request and waits for a response. In an RFID system, the interrogator can be a reader that sends a query request to a passive tag and waits for a response from the tag. The concept of the interrogator can be extended to other IoT communication scenarios where devices or sensors can communicate with the network by responding to specific requests.

The main function(s) of the interrogator is to communicate with the passive tag or other devices to obtain required information. In an ambient-powered IoT, the interrogator may need to handle communications with low-power devices to ensure effective collection of data from environmental sensors.

The ambient IoT devices have relatively low complexity and relatively low cost, can be maintenance-free and battery-free, and can obtain the energy required for communication from the environment through energy harvesting and then perform communication through backscattering or low-power active transmission. The ambient IoT devices can achieve large-density and large-scale deployment at a relatively low cost. During deployment, an ambient IoT device can be used as a positioning anchor to assist positioning, thereby improving positioning accuracy, such as positioning for goods in logistics scenarios, positioning for animals in farms of animal husbandry, low-power positioning for individual users and items, positioning in indoor environments such as shopping malls, etc.

How to achieve positioning using Ambient IoT devices is an issue to be addressed. Ambient IoT devices can obtain energy for communication through ambient energy harvesting, which can be harvesting of various energies such as RF energy, solar energy, thermal energy, mechanical energy, etc. Compared with traditional terminals with batteries, the communication of Ambient IoT devices is affected by their energy state.

When the ambient IoT devices perform positioning, how to avoid the impact of the energy state on positioning performance is crucial. Therefore, to enable positioning based on ambient IoT devices, a solution for positioning is provided in the disclosure. The solution considers the impact of an energy state of an ambient IoT device on communication and supports ambient IoT devices with different communication modes.

Reference may be made to FIG. 4, which illustrates a flowchart of a method for device wake-up provided in an embodiment of the disclosure. The method can be performed by an IoT device, where the IoT device may be the ambient power-enabled IoT device 130 in the network architecture as illustrated in FIG. 1. The method may include the following.

At S401, a wake-up signal (WUS) is received via a wake-up receiver of the IoT device, where the WUS contains an operation command.

The wake-up receiver is a component configured to monitor, when the device is in a dormant state, specific signals to wake up the device. The component has extremely low power consumption. Common types of wake-up receivers include wireless communication receivers and RFID receivers. The design of the wake-up receiver allows the IoT device to respond to an event(s) when needed and reduce power consumption when not needed.

At S402, a main transceiver of the IoT device is woken up.

The main transceiver is the primary wireless transceiver of the IoT device responsible for communication with a network, and is responsible for data transmission and reception.

In some embodiments, the main transceiver is in a dormant state by default, and is woken up to start operating in a case where a specific WUS is received.

At S403, the operation command is forwarded to the main transceiver, so that the main transceiver executes the operation command.

The operation command indicates that the main transceiver is to perform a target operation.

For example, in embodiments of the disclosure, when the wake-up receiver wakes up the main transceiver, the wake-up receiver also forwards the operation command carried in the received WUS to the main transceiver, so that the main transceiver can execute the operation command immediately after being woken up.

In summary, in embodiments of the disclosure, after the wake-up receiver of the IoT device receives the WUS, the wake-up receiver wakes up the main transceiver of the IoT device, and then forwards the operation command to the main transceiver of the IoT device, so that the main transceiver can execute the operation command according to the operation command in the WUS. In this way, the method for waking up an IoT device can be extended, so that the main transceiver can execute the operation command immediately after being woken up, thereby improving the wake-up effect of the IoT device and the efficiency of command execution by the IoT device after being woken up.

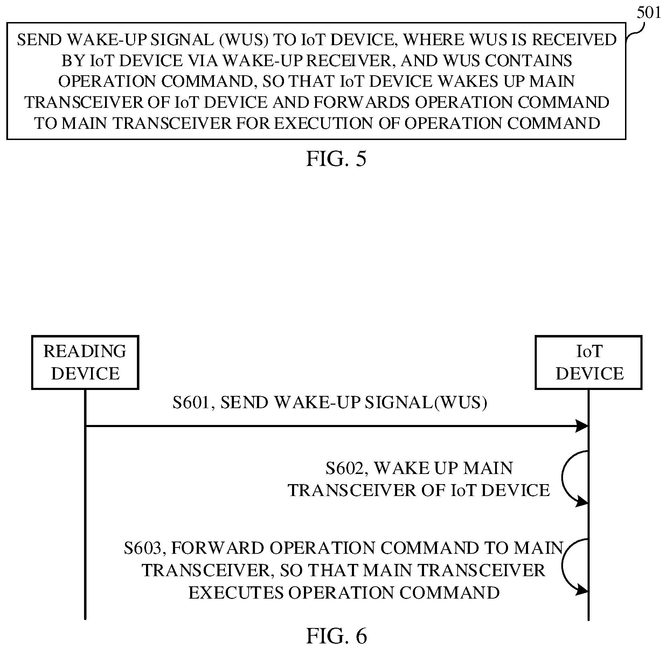

Reference may be made to FIG. 5, which illustrates a flowchart of a method for device wake-up provided in an embodiment of the disclosure. The method can be performed by a reading device, where the reading device may be the terminal device 120 in the network architecture as illustrated in FIG. 1. The method may include the following.

At S501, a WUS is sent to an IoT device, where the WUS is received by the IoT device via a wake-up receiver, and the WUS contains an operation command, so that the IoT device wakes up a main transceiver of the IoT device and forwards the operation command to the main transceiver for execution of the operation command.

In summary, in the solution as illustrated in embodiments of the disclosure, the reading device sends the WUS to the IoT device. After the wake-up receiver of the IoT device receives the WUS, the wake-up receiver forwards the WUS to the main transceiver of the IoT device to wake up the main transceiver. In this way, the method for waking up an IoT device can be extended, so that the main transceiver can execute the operation command immediately after being woken up, thereby improving the wake-up effect of the IoT device.

Reference may be made to FIG. 6, which illustrates a flowchart of a method for device wake-up provided in an embodiment of the disclosure. The method can be performed interactively by an IoT device and a reading device. The reading device may be the terminal device 120 in the network architecture as illustrated in FIG. 1, and the IoT device may be the ambient power-enabled IoT device 130 in the network architecture as illustrated in FIG. 1. The method may include the following.

At S601, the reading device sends a WUS to the IoT device. Correspondingly, the IoT device receives the WUS via a wake-up receiver of the IoT device, where the WUS contains an operation command.

At S602, the IoT device wakes up a main transceiver of the IoT device.

At S603, the IoT device forwards the operation command to the main transceiver, so that the main transceiver executes the operation command.

In some embodiments, the WUS further contains a control field, where the control field is used to carry identification information of a device to be woken up by the WUS. The main transceiver of the IoT device is woken up as follows. The main transceiver is woken up in the case where the identification information of the device to be woken up by the WUS matches the IoT device.

The identification information is used to identify information of the device to be woken up. The identification information may be a device number, such as any one or more of a device serial number, a device identity (ID), and an electronic product code (EPC). Alternatively, the identification information may be an identifier shared by multiple devices, such as a group number.

In embodiments of the disclosure, after receiving the WUS, the IoT device can match identification information of the IoT device with the identification information of the device carried in the control field in the WUS. In the case where the information matches (e.g., the identification information of the IoT device is consistent with the identification information of the device carried in the control field), the main transceiver of the IoT device is woken up. In this way, the accuracy of waking up the IoT device by the reading device can be ensured, so that the method for waking up an IoT device can be extended, and thus the efficiency of device wake-up can be improved.

In some embodiments, the control field contains a control subfield and a sequence number subfield. The control subfield indicates an addressing mode for the WUS, where the addressing mode is group addressing or individual addressing. The sequence number subfield indicates an address sequence number corresponding to the addressing mode.

For example, when the addressing mode is group addressing, the sequence number subfield indicates a group number corresponding to group addressing. In this case, the IoT device can match its own group number with the group number in the sequence number subfield. If the group number of the IoT device is consistent with the group number in the sequence number subfield, the main transceiver is woken up. When the addressing mode is individual addressing, the sequence number subfield indicates a device number corresponding to group addressing. In this case, the IoT device can match its own device number with the device number in the sequence number subfield. If the device number of the IoT device is consistent with the device number in the sequence number subfield, the main transceiver is woken up.

In embodiments of the disclosure, the control subfield and the sequence number subfield in the control field in the WUS can indicate the addressing mode and the address sequence number corresponding to the addressing mode. A combination of the addressing mode and the address sequence number can clearly indicate a receiving target of the WUS, so that the IoT device can be woken up more efficiently, thereby supporting multiple different addressing modes for wake-up, and thus improving the efficiency of waking up the IoT device.

In some embodiments, address sequence numbers corresponding to different addressing modes have the same length or different lengths.

For example, for individual addressing, a relatively short address sequence number may be selected, and for group addressing, a relatively long address sequence number may be selected. Alternatively, for individual addressing, a relatively long address sequence number may be selected, and for group addressing, a relatively short address sequence number may be selected.

In embodiments of the disclosure, address sequence numbers corresponding to different addressing modes have relatively flexible length, which can better adapt to different communication requirements, thereby ensuring support for different addressing modes, and thus improving wake-up efficiency. In addition, unnecessary resource waste can be avoided, thereby improving the communication efficiency between devices, and thus ensuring the efficiency of device wake-up.

In some embodiments, in the case where the address sequence numbers corresponding to the different addressing modes have different lengths and a length of the address sequence number is less than a length of the sequence number subfield, bits other than the address sequence number in the sequence number subfield are filled with padding bits.

A padding mode may refer to that a zero bit(s) is added to the beginning or the end of the address sequence number to achieve a required fixed length of the address field.

In embodiments of the disclosure, a bit(s) at the beginning or the end of the sequence number subfield is padded (e.g., padded with 0 or 1), so that a uniform format can be ensured, and the complexity of data transmission can be reduced, and thus the reliability of data transmission can be improved, thereby improving the reliability of device wake-up.

For example, the control subfield in the control field can be used to distinguish between group addressing and individual addressing. For instance, when a value in the control field is binary "1", it indicates group addressing and a group number is sent (i.e., the sequence number subfield contains a group number). When the value in the control field is binary "0", it indicates individual addressing and a device number is sent (i.e., the sequence number subfield contains a device number). The group number and the device number may have the same length or different lengths. When the group number and the device number have different lengths, they can be aligned using padding bits. For example, the group number has a length of 8 bits, and the device number has a length of 16 bits. For alignment, 8 padding bits can be added before the group number. For instance, if a group number is "10101101" and a device number is "1101101101010101", to align the group number and the device number in length, 8 padding bits can be added before the group number, resulting in a padded group number "0000000010101101" and a padded device number "1101101101010101". In this way, both the group number and device number have a length of 16 bits, thereby facilitating processing and comparison.

In some embodiments, the WUS further contains a synchronization sequence, where the synchronization sequence is used by the wake-up receiver to perform frequency and time synchronization.

In embodiments of the disclosure, the synchronization sequence in the WUS can help the wake-up receiver achieve frequency synchronization, so that matching in operating frequency and time domain between a receiver and a transmitter can be ensured, which plays a key role in synchronization and calibration during data transmission and reception, thereby improving the performance and reliability of the entire communication system when the IoT device is woken up.

In some embodiments, the synchronization sequence is a fixed binary sequence, or the synchronization sequence is one of multiple fixed binary sequences.

The synchronization sequence is mainly used for frequency and time synchronization of a receiver.

For example, the synchronization sequence may be a binary sequence "1111010101010101". Alternatively, the synchronization sequence may be one of multiple predefined binary sequences.

The synchronization sequence may be predefined in a protocol.

Alternatively, the synchronization sequence may be pre-notified to the IoT device by a base station or the reading device. For example, when the IoT device initially accesses a network, the reading device or the base station around the IoT device may configure the synchronization sequence for the IoT device.

In embodiments of the disclosure, a fixed single synchronization sequence can be used to meet simple requirements. In complex communication systems, multiple synchronization sequences can improve system robustness, thereby ensuring the reliability of waking up the IoT device by the WUS.

In some embodiments, the operation command indicates a purpose of waking up the main transceiver by the WUS.

The command field indicates the purpose of the wake-up operation, such as device state query, data reporting request, key update, data reporting period adjustment, feedback request for whether *N* previous downlink data packets were successfully received, etc.

In embodiments of the disclosure, the operation command in the WUS can clarify a task to be performed by the main transceiver, allowing the main transceiver to execute the corresponding task immediately after being woken up, thereby improving the efficiency of task execution by the main transceiver of the IoT device after being woken up.

In some embodiments, different types of operation commands have the same length or different lengths.

In embodiments of the disclosure, flexible selection of different lengths for different types of operation commands can effectively improve the execution efficiency of the communication system.

In some embodiments, the operation command is carried in the command field in the WUS. In the case where the different types of operation commands have different lengths and a length of the operation command is less than a length of the command field, bits other than the operation command in the command field are filled with padding bits.

A padding mode for the command field may refer to that bit 0 or bit 1 is added to the beginning or the end of the operation command in the command field to achieve a fixed length required for the operation command.

In embodiments of the disclosure, a bit(s) at the beginning or the end of the operation command in the command field is padded (e.g., padded with 0 or 1), so that a uniform format can be ensured, and the complexity of data transmission can be reduced, and thus the reliability of data transmission can be improved, thereby improving the reliability of device wake-up.

In embodiments of the disclosure, after receiving the WUS, the IoT device can perform corresponding operations according to the operation command in the command field, thereby improving the efficiency of device wake-up.

In some embodiments, the command field further contains operation data for executing the operation command.

The operation data is data required for waking up a device to execute a specific command. For example, if a reader updates an internal state of the IoT device, the operation command can indicate that the main transceiver is to update the internal state of the IoT device. In this case, the operation data can indicate the updated internal state of the IoT device.

In embodiments of the disclosure, after receiving the WUS, the IoT device directly executes the specific command according to the operation data in the command field in the WUS, thereby effectively improving the efficiency of waking up the IoT device.

In some embodiments, the WUS further contains a cyclic redundancy check (CRC), where the CRC is used to check information other than the CRC in the WUS.

In embodiments of the disclosure, the CRC is used to check the integrity of both the WUS and related information, thereby ensuring the reliability of waking up the device, and thus improving the efficiency of waking up the device.

In some embodiments, the IoT device forwards the operation command to the main transceiver as follows. The operation command is written into a command register via the wake-up receiver, and an active flag bit of the command register is set via the wake-up receiver. The operation command is read from the command register via the main transceiver, and the active flag bit of the command register is cleared via the main transceiver.

The command register and the active flag bit of the command register can be set in the IoT device, and can be accessed by the wake-up receiver and the main transceiver. After receiving the WUS and confirming that the main transceiver needs to be woken up, the wake-up receiver can write the operation command in the WUS into the command register, and set the active flag bit of the command register to a specified value (e.g., set to 1). After the main receiver is woken up, the main receiver can access the active flag bit of the command register to clear the active flag bit. If the main receiver determines that the active flag bit is 1, the main receiver reads the operation command from the command register and resets the active flag bit of the command register to 0, indicating that the operation command has been read.

The active flag bit may be one or more bits in the command register (e.g., the first one or more bits in the command register). Alternatively, the active flag bit may be one or more bits in a register other than the command register.

In embodiments of the disclosure, the active flag bit of the command register is set and cleared, so that the main receiver can be prevented from repeatedly reading the operation command, thereby avoiding unnecessary resource waste, and thus improving the efficiency of the entire wake-up process between devices.

In some embodiments, in response to the operation command having corresponding feedback data, the IoT device sends the feedback data via the main transceiver.

Correspondingly, the reading device receives the feedback data sent by the main transceiver of the IoT device and corresponding to the operation command, and adjusts a transmission parameter(s) to be sent to the IoT device.

The feedback data can indicate a reception status of data sent by the reading device to the IoT device, for example, whether the data sent by the reading device was successfully received.

Optionally, in the case where the feedback data indicates the reception status of the data sent by the reading device to the IoT device, the reading device receives the feedback data sent by the main transceiver of the IoT device and corresponding to the operation command, and adjusts the transmission parameter(s) to be sent to the IoT device.

In embodiments of the disclosure, after receiving the feedback data, the reading device can adjust the transmission parameter(s) to be sent to the IoT device at an appropriate frequency and an appropriate time point, to avoid collisions of data from multiple devices, thereby ensuring data security during device wake-up, and thus improving the effect of waking up the IoT device.

In some embodiments, the transmission parameter may include at least one of a transmission power, a data rate, or a modulation and coding scheme (MCS).

For example, when the feedback data indicates that the IoT device failed to receive part or all of the data sent by the reading device, the reading device can adjust the transmission parameter(s) for the data to be sent to the IoT device, such as increasing the transmission power, lowering the data rate, changing the MCS, etc.

In embodiments of the disclosure, the reading device can adjust the various parameters mentioned above, thereby effectively ensuring that the adjusted parameter(s) can be effectively received, and thus ensuring the reliability of data transmission and improving the efficiency of the entire wake-up operation.

In some embodiments, the feedback data includes data-packet-reception feedback information, where the data-packet-reception feedback information indicates whether the IoT device has successfully received *N* data packets sent by the reading device before the WUS, and *N* is an integer greater than or equal to 1.

In embodiments of the disclosure, the reading device can promptly know, through the data-packet-reception feedback information, whether the IoT device has successfully received the *N* data packets sent by the reading device before the WUS. In this way, the reading device can adjust parameters promptly when the data packets are not successfully received, thereby improving the reliability of waking up the IoT device and sending the data to the IoT device by the reading device, and thus improving the efficiency of waking up the IoT device and sending the data to the IoT device.

In some embodiments, sequence numbers of the data packets sent by the reading device increase sequentially, and the sequence numbers of the data packets sent by the reading device are reset when a specified condition is met. The specified condition includes the following: a sequence number of a data packet sent by the reading device reaches a maximum value, or the data-packet-reception feedback information indicates that the IoT device has successfully received the *N* data packets sent by the reading device before the WUS.

The sequence number of the data packet may be reset to zero.

In embodiments of the disclosure, an increase in the sequence numbers of the data packets can prevent the IoT device from receiving duplicate data packets, thereby ensuring data reliability. The sequence numbers of the data packets are reset when a sequence number of a data packet reaches the maximum value/the IoT device feeds back that the *N* data packets sent by the reading device before the WUS have been successfully received, which can prevent overflow of the sequence numbers, thereby contributing to the stability of the communication system, and thus improving the efficiency of waking up the IoT device.

In other embodiments, the feedback data may be data corresponding to the operation command. For example, the operation command is a command to read a sensor reading(s) from the IoT device, and the feedback data may be the sensor reading(s) from the IoT device.

In some embodiments, the method further includes the following. In the case where the operation command indicates that the IoT device is to receive transmission data, the IoT device receives the transmission data via the main receiver, where the transmission data is data sent by the reading device after a specified duration from a time at which the WUS is sent.

Correspondingly, in the case where the operation command indicates that the IoT device is to receive the transmission data sent by the reading device, the reading device sends the transmission data to the IoT device after the specified duration from the time at which the WUS is sent.

In embodiments of the disclosure, the devices perform data transmission and reception at a specific time interval, which can effectively avoid communication collisions, thereby improving the communication efficiency of the system. Meanwhile, there is no need to schedule a resource(s) for data transmission, thereby improving the efficiency of transmission and reception of the transmission data.

In some embodiments, the specified duration is configured by the reading device for the IoT device, or the specified duration is predefined in a protocol.

For example, during initial communication/establishment of a connection between the IoT device and the reading device, the reading device may configure the specified duration for the IoT device.

Alternatively, the specified duration may be predefined in a communication protocol.

In embodiments of the disclosure, each IoT device may have a different configuration, allowing the duration to be adjusted according to the characteristics and requirements of the device, thereby providing flexibility. For another thing, a predefined duration according to the protocol can ensure that all devices follow the same rules under a common communication protocol, thereby ensuring consistency of operations, and thus contributing to system stability. In summary, both manners for setting the specified duration can be conducive to ensuring the reliability of waking up the IoT device.

In some embodiments, the minimum value of the specified duration is an upper limit of a duration from reception of the WUS by the IoT device to completion, via the main transceiver, of preparation for data reception.

In embodiments of the disclosure, the duration from the reception of the WUS by the IoT device to the completion, via the main transceiver, of the preparation for data reception is set to the minimum value of the specified duration, so that the IoT device can be ensured to effectively perform wake-up operation and successfully receive the transmission data, thereby guaranteeing the success rate and accuracy of transmission and reception of the transmission data.

In some embodiments, in response to the operation command having corresponding feedback data, the IoT device sends the feedback data via the main transceiver as follows. In response to the operation command having corresponding feedback data, the IoT device sends the feedback data via the main transceiver after a specified duration from a time at which the WUS is received.

In embodiments of the disclosure, the IoT device sends the feedback data at a specified time from the time at which the WUS is received, so that real-time performance and synchronization of the system can be achieved. As such, a device can respond according to a predetermined schedule, thereby ensuring completion of a task(s) within a specific duration, and thus effectively improving the efficiency of waking up the IoT device. Meanwhile, there is no need for additional scheduling of a time-domain resource(s) for the feedback data, thereby simplifying the complexity of feedback data scheduling, and thus improving the transmission efficiency of the feedback data.

Taking a wake-up process of an ambient power-enabled IoT device as an example, based on the solutions as illustrated in FIG. 4 to FIG. 6 mentioned above, a specific application process can be as follows.

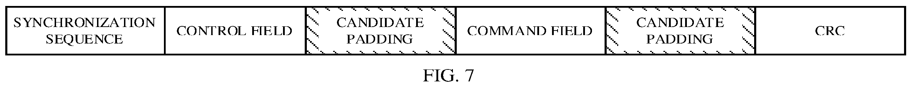

Precondition: after deployment, a device first establishes a connection with a reader, the reader allocates a local device logical ID (generally relatively short than a device physical ID), and the device is in a dormant state when there is no data transmission/reception.
1. When the reader needs to perform an operation(s) on a specific device or a device group (e.g., querying, updating a device state, or performing data transmission to the device), the reader first wakes up the specific device or the device group through a low-power wake-up signal (LP-WUS). Correspondingly, the device has an ultra-low power (as low as microwatt level) WUS receiver and a relatively high power (milliwatt level or higher) main transmitter. The WUS receiver is always operating, and the main transmitter in a dormant state is woken up and starts operating when the main transmitter receives a specific wake-up signal.
   a) A physical waveform of the WUS can be a relatively narrowband (a few hundred kHz to a few MHz) simple waveform in a frequency domain, such as on-off keying (OOK) or ASK.
      The content of the WUS is as illustrated in FIG. 7. Reference may be made to FIG. 7, which illustrates a schematic structural diagram of a wake-up sequence involved in an embodiment of the disclosure.
      i. The first part is a fixed sequence or a sequence selected from a set of fixed sequences.
      ii. The fixed sequence is followed by a control field indicating an addressing mode, where the addressing mode is used to distinguish between group addressing and individual addressing.
      iii. The address field is followed by a command field, where the command field indicates a purpose of a wake-up operation. Different commands may have the same length or different lengths. When different commands have different lengths, alignment can be achieved by using padding bits.
      iv. The command field is followed by a CRC, where the CRC is used for data integrity protection of the control field and the command field.
   b) A wake-up receiver of the device achieves time and frequency synchronization through a synchronization sequence, receives the control field, the command field, and the CRC, and performs CRC check. If the check passes, the wake-up receiver wakes up a main transceiver and forwards an operation command to the main transceiver.
      For example, the wake-up receiver writes the operation command into a command register inside the device, and sets an active flag bit of the command register. After being woken up, the main transceiver reads the command register and clears the active flag bit.
2. After reading the operation command, the main transceiver executes operations corresponding to the command as follows.
   a) Perform internal data update, and no need to subsequently send data to the reader or receive data from the reader. After the update is completed, the main transceiver re-enters a dormant state.
   b) Report data to the reader.
   c) Receive data from the reader.

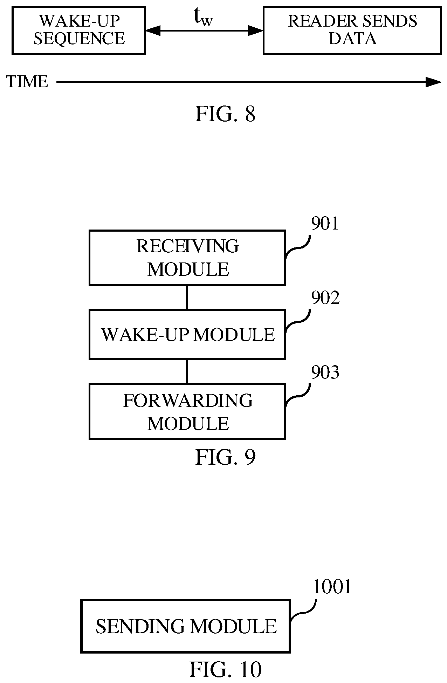

Reference may be made to FIG. 8, which is a schematic diagram illustrating a process in which a reader wakes up a device and forwards data involved in an embodiment of the disclosure.

To save energy consumption of an IoT device, after sending a wake-up command containing an operation requiring the device to receive data from the reader, the reader waits for a certain time *t_{w}* and then directly sends data, without requiring an acknowledgement (ACK) from the reader. A specific value of *t_{w}* can be set by the reader during initial access performed by the device. A minimum value of the specific value is an upper limit of a duration required for the device to receive a WUS, activate the main transceiver, and complete preparation for receiving data from the reader.
i. To confirm whether the device is operating normally, the reader can request, via the command field in the activation signal, the device to provide feedback on whether *N* (can be configured by the reader, *Nₘₐₓ* - *Nₘᵢₙ* + 1>=*N*>=1, and 0<= *Nₘᵢₙ* < *Nₘₐₓ*) previous data packets were successfully received. If the device feeds back unsuccessful reception, the reader can adjust a parameter(s) for transmission data (a transmission power, a data rate, an MCS, etc.).
ii. The data sent by the reader contains a data-packet sequence number subfield. A value of the sequence number subfield may be an integer between [*Nₘᵢₙ*, *Nₘₐₓ*]. A sequence number is incremented by 1 for each sent data packet. After reaching *Nₘₐₓ*, a sequence number for the next data packet is reset to *N_{min,}* and counting restarts. Alternatively, after the device feeds back successfully reception of the *N* previous data packets (*Nₘₐₓ* - *Nₘᵢₙ* + 1 >= N >= 1, and can be configured by the reader), the value of the sequence number subfield is reset to *Nₘᵢₙ*, and counting restarts.

In summary, in embodiments of the disclosure, the wake-up and data reception process for the low-power IoT device that relies on harvesting ambient energy is illustrated. Through the solutions of embodiments of the disclosure, the low-power IoT device can maintain ultra-low power consumption when there is no data transmission/reception, and can be woken up and promptly respond to the command and data from the reader when there is data transmission/reception. The solutions of embodiments of the disclosure are crucial for the low-power IoT system that harvests ambient energy for operation.

Reference may be made to FIG. 9, which illustrates a block diagram of an apparatus for device wake-up provided in an embodiment of the disclosure. The apparatus for device wake-up has a function(s) of implementing the method performed by the IoT device in any one of the methods as illustrated in FIG. 4 and FIG. 6. As illustrated in FIG. 9, the apparatus may include a receiving module 901, a wake-up module 902, and a forwarding module 903. The receiving module 901 is configured to receive, via a wake-up receiver of the IoT device, a WUS, where the WUS contains an operation command. The wake-up module 902 is configured to wake up a main transceiver of the IoT device. The forwarding module 903 is configured to forward the operation command to the main transceiver, so that the main transceiver executes the operation command.

In some embodiments, the WUS further contains a control field, where the control field is used to carry identification information of a device to be woken up by the WUS. The wake-up module 902 is configured to wake up the main transceiver in the case where the identification information of the device to be woken up by the WUS matches the IoT device.

In some embodiments, the control field contains a control subfield and a sequence number subfield, where the control subfield indicates an addressing mode for the WUS, where the addressing mode is group addressing or individual addressing, and the sequence number subfield indicates an address sequence number corresponding to the addressing mode.

In some embodiments, address sequence numbers corresponding to different addressing modes have the same length or different lengths.

In some embodiments, in the case where the address sequence numbers corresponding to the different addressing modes have different lengths and a length of the address sequence number is less than a length of the sequence number subfield, bits other than the address sequence number in the sequence number subfield are filled with padding bits.

In some embodiments, the WUS further contains a synchronization sequence, where the synchronization sequence is used by the wake-up receiver to perform frequency and time synchronization.

In some embodiments, the synchronization sequence is a fixed binary sequence, or the synchronization sequence is one of multiple fixed binary sequences.

In some embodiments, the operation command indicates a purpose of waking up the main transceiver by the WUS.

In some embodiments, different types of operation commands have the same length or different lengths.

In some embodiments, the operation command is carried in command field in the WUS. In the case where the different types of operation commands have different lengths and a length of the operation command is less than a length of the command field, bits other than the operation command in the command field are filled with padding bits.

In some embodiments, the command field further contains operation data for executing the operation command.

In some embodiments, the WUS further contains a CRC, where the CRC is used to check information other than the CRC in the WUS.

In some embodiments, the forwarding module 903 is configured to write, via the wake-up receiver, the operation command into a command register, and set, via the wake-up receiver, an active flag bit of the command register. The forwarding module 903 is configured to read, via the main transceiver, the operation command from the command register, and clear, via the main transceiver, the active flag bit of the command register.

In some embodiments, the apparatus further includes a feedback data sending module. The feedback data sending module is configured to send, in response to the operation command having corresponding feedback data, the feedback data via the main transceiver.

In some embodiments, the feedback data includes data-packet-reception feedback information, where the data-packet-reception feedback information indicates whether the IoT device has successfully received *N* data packets sent by a reading device before the WUS, and *N* is an integer greater than or equal to 1.

In some embodiments, sequence numbers of the data packets sent by the reading device increase sequentially, and the sequence numbers of the data packets sent by the reading device are reset when a specified condition is met. The specified condition includes the following: a sequence number of a data packet sent by the reading device reaches a maximum value, or the data-packet-reception feedback information indicates that the IoT device has successfully received the *N* data packets sent by the reading device before the WUS.

In some embodiments, the apparatus further includes a transmission data receiving module. The transmission data receiving module is configured to receive, via the main receiver, transmission data sent by a reading device in the case where the operation command indicates that the IoT device is to receive the transmission data, where the transmission data is data sent by the reading device after a specified duration from a time at which the WUS is sent.

In some embodiments, the specified duration is configured by the reading device for the IoT device, or the specified duration is predefined in a protocol.

In some embodiments, a minimum value of the specified duration is an upper limit of a duration required from reception of the WUS by the IoT device to completion, via the main transceiver, of preparation for data reception.

Reference may be made to FIG. 10, which illustrates a block diagram of an apparatus for device wake-up provided in an embodiment of the disclosure. The apparatus for device wake-up has a function(s) of implementing the method performed by the reading device in any one of the methods as illustrated in FIG. 5 and FIG. 6. As illustrated in FIG. 10, the apparatus may include a sending module 1001. The sending module 1001 is configured to send a WUS to an IoT device, where the WUS is received by the IoT device via a wake-up receiver, and the WUS contains an operation command, so that the IoT device wakes up a main transceiver of the IoT device and forwards the operation command to the main transceiver for execution of the operation command.

In some embodiments, the WUS further contains a control field, where the control field is used to carry identification information of a device to be woken up by the WUS.

In some embodiments, the control field contains a control subfield and a sequence number subfield, where the control subfield indicates an addressing mode for the WUS, where the addressing mode is group addressing or individual addressing, and the sequence number subfield indicates an address sequence number corresponding to the addressing mode.

In some embodiments, address sequence numbers corresponding to different addressing modes have the same length or different lengths.

In some embodiments, in the case where the address sequence numbers corresponding to the different addressing modes have different lengths and a length of the address sequence number is less than a length of the sequence number subfield, bits other than the address sequence number in the sequence number subfield are filled with padding bits.

In some embodiments, the WUS further contains a synchronization sequence, where the synchronization sequence is used by the wake-up receiver to perform frequency and time synchronization.

In some embodiments, the synchronization sequence is a fixed binary sequence, or the synchronization sequence is one of multiple fixed binary sequences.

In some embodiments, the operation command indicates a purpose of waking up the main transceiver by the WUS.

In some embodiments, different types of operation commands have the same length or different lengths.

In some embodiments, the operation command is carried in command field in the WUS. In the case where the different types of operation commands have different lengths and a length of the operation command is less than a length of the command field, bits other than the operation command in the command field are filled with padding bits.

In some embodiments, the command field further contains operation data for executing the operation command.

In some embodiments, the WUS further contains a CRC, where the CRC is used to check information other than the CRC in the WUS.

In some embodiments, the apparatus further includes an adjustment module. The adjustment module is configured to receive feedback data sent by the main transceiver of the IoT device and corresponding to the operation command, and adjust a transmission parameter to be sent to the IoT device.

In some embodiments, the transmission parameter includes at least one of a transmission power, a data rate, or an MCS.

In some embodiments, the feedback data includes data-packet-reception feedback information, where the data-packet-reception feedback information indicates whether the IoT device has successfully received *N* data packets sent by the reading device before the WUS, and *N* is an integer greater than or equal to 1.

In some embodiments, sequence numbers of the data packets sent by the reading device increase sequentially, and the sequence numbers of the data packets sent by the reading device are reset when a specified condition is met. The specified condition includes the following: a sequence number of a data packet sent by the reading device reaches a maximum value, or the data-packet-reception feedback information indicates that the IoT device has successfully received the *N* data packets sent by the reading device before the WUS.

In some embodiments, the apparatus further includes a data sending module. The data sending module is configured to, in the case where the operation command indicates that the IoT device is to receive transmission data sent by the reading device, send the transmission data to the IoT device after a specified duration from a time at which the WUS is sent.

In some embodiments, the specified duration is configured by the reading device for the IoT device, or the specified duration is predefined in a protocol.

In some embodiments, a minimum value of the specified duration is an upper limit of a duration required from reception of the WUS by the IoT device to completion, via the main transceiver, of preparation for data reception.

It can be noted that, when the apparatus provided in the foregoing embodiments implements its functions, only the division into the above functional modules is taken as an example for illustration. In practice, the above functions can be allocated to different functional modules according to actual needs, that is, the structure of the device is divided into different functional modules to complete all or some of the functions described above.

Regarding the apparatus in the foregoing embodiments, the manner in which each module performs operations has been described in detail in the related method embodiments and thus will not be elaborated again herein.

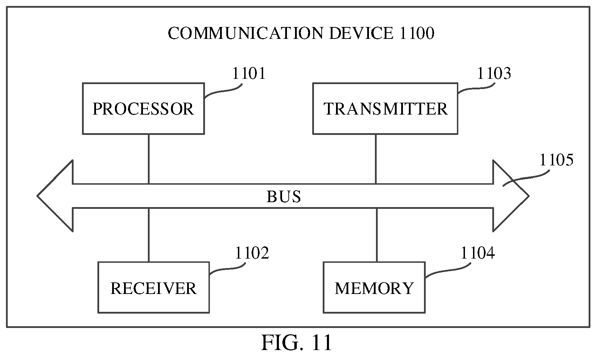

Reference may be made to FIG. 11, which illustrates a schematic structural diagram of a communication device 1100 provided in an embodiment of the disclosure. The communication device 1100 may include a processor 1101, a receiver 1102, a transmitter 1103, a memory 1104, and a bus 1105.

The processor 1101 includes one or more processing cores, and the processor 1101 executes various function applications and information processing by running software programs and modules.

The receiver 1102 and the transmitter 1103 may be implemented as a communication assembly, and the communication assembly may be a communication chip. The communication chip may also be referred to as a transceiver. The memory 1104 is connected to the processor 1101 via the bus 1105. The memory 1104 may be configured to store a computer program. The processor 1101 is configured to execute the computer program, so as to implement various steps in the foregoing method embodiments.

In addition, the memory 1104 may be implemented by any type of volatile storage device, non-volatile storage device, or a combination thereof. The volatile storage device or non-volatile storage device includes, but is not limited to, a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In an exemplary solution, when the communication device 1100 is implemented as the IoT device, the receiver 1102 and the processor 1101 execute the computer program, to cause the communication device to implement various steps performed by the IoT device in the methods as illustrated in FIG. 4 to FIG. 6.

In an exemplary solution, when the communication device 1100 is implemented as the reading device, the transmitter 1103 executes the computer program, to cause the communication device to implement various steps performed by the reading device in the methods as illustrated in FIG. 4 to FIG. 6.

A computer-readable storage medium is further provided in embodiments of the disclosure. The computer-readable storage medium is configured to store a computer program that is loaded and executed by a processor, to implement all or part of the steps performed by the IoT device or the reading device in the methods as illustrated in FIG. 4 to FIG. 6.

A chip is further provided in the disclosure. The chip is configured to execute in a communication device, to cause the communication device to implement all or part of the steps performed by the IoT device or the reading device in the methods as illustrated in FIG. 4 to FIG. 6.

A computer program product is further provided in the disclosure. The computer program product or computer program includes computer instructions stored in a computer-readable storage medium. A processor of a communication device is configured to read the computer instructions from the computer-readable storage medium and execute the computer instructions, to cause the communication device to implement all or part of the steps performed by the IoT device or the reading device in the methods as illustrated in FIG. 4 to FIG. 6.

A computer program is further provided in the disclosure. The computer program is executed by a processor of a communication device, to cause the communication device to implement all or part of the steps performed by the IoT device or the reading device in the methods as illustrated in FIG. 4 to FIG. 6.

Those skilled in the art can appreciate that in one or more of the above examples, the functions described in embodiments of the disclosure may be implemented by hardware, software, firmware, or any combination thereof. When implemented by software, the functions may be stored in a computer-readable medium or transmitted as one or more instructions or codes in the computer-readable medium. The computer-readable medium includes a computer storage medium and a communication medium, where the communication medium includes any medium that facilitates transfer of a computer program from one place to another, and the storage medium may be any available medium that can be accessed by a general-purpose computer or a special-purpose computer.

The foregoing elaborations are merely exemplary embodiments of the disclosure, and are not intended to limit the disclosure. Any modification, equivalent replacement, and improvement made within the concept and principle of the disclosure shall fall within the protection scope of the disclosure.

## Claims

1. A method for device wake-up, performed by an internet of things (IoT) device and comprising:
receiving, via a wake-up receiver of the IoT device, a wake-up signal (WUS), wherein the WUS contains an operation command;
waking up a main transceiver of the IoT device; and
forwarding the operation command to the main transceiver, so that the main transceiver executes the operation command.

2. The method of claim 1, wherein the WUS further contains a control field, wherein the control field is used to carry identification information of a device to be woken up by the WUS; and
waking up the main transceiver of the IoT device comprises:
waking up the main transceiver in a case where the identification information of the device to be woken up by the WUS matches the IoT device.

3. The method of claim 2, wherein the control field contains a control subfield and a sequence number subfield, wherein
the control subfield indicates an addressing mode for the WUS, wherein the addressing mode is group addressing or individual addressing; and
the sequence number subfield indicates an address sequence number corresponding to the addressing mode.

4. The method of claim 3, wherein address sequence numbers corresponding to different addressing modes have the same length or different lengths.

5. The method of claim 4, wherein in a case where the address sequence numbers corresponding to the different addressing modes have different lengths and a length of the address sequence number is less than a length of the sequence number subfield, bits other than the address sequence number in the sequence number subfield are filled with padding bits.

6. The method of any one of claims 1 to 5, wherein the WUS further contains a synchronization sequence, wherein the synchronization sequence is used by the wake-up receiver to perform frequency and time synchronization.

7. The method of claim 6, wherein
the synchronization sequence is a fixed binary sequence; or
the synchronization sequence is one of a plurality of fixed binary sequences.

8. The method of any one of claims 1 to 7, wherein the operation command indicates a purpose of waking up the main transceiver by the WUS.

9. The method of any one of claims 1 to 8, wherein different types of operation commands have the same length or different lengths.

10. The method of claim 9, wherein the operation command is carried in a command field in the WUS; and
in a case where the different types of operation commands have different lengths and a length of the operation command is less than a length of the command field, bits other than the operation command in the command field are filled with padding bits.

11. The method of claim 10, wherein the command field further contains operation data for executing the operation command.

12. The method of any one of claims 1 to 10, wherein the WUS further contains a cyclic redundancy check (CRC), wherein the CRC is used to check information other than the CRC in the WUS.

13. The method of any one of claims 1 to 12, wherein forwarding the operation command to the main transceiver comprises:
writing, via the wake-up receiver, the operation command into a command register, and setting, via the wake-up receiver, an active flag bit of the command register; and
reading, via the main transceiver, the operation command from the command register, and clearing, via the main transceiver, the active flag bit of the command register.

14. The method of any one of claims 1 to 13, further comprising:
in response to the operation command having corresponding feedback data, sending, via the main transceiver, the feedback data.

15. The method of claim 14, wherein the feedback data comprises data-packet-reception feedback information, wherein the data-packet-reception feedback information indicates whether the IoT device has successfully received *N* data packets sent by a reading device before the WUS, and *N* is an integer greater than or equal to 1.

16. The method of claim 15, wherein sequence numbers of the data packets sent by the reading device increase sequentially, and the sequence numbers of the data packets sent by the reading device are reset when a specified condition is met, wherein
the specified condition comprises:
a sequence number of a data packet sent by the reading device reaches a maximum value; or
the data-packet-reception feedback information indicates that the IoT device has successfully received the *N* data packets sent by the reading device before the WUS.

17. The method of any one of claims 1 to 16, comprising:
receiving, via the main receiver, transmission data sent by a reading device in a case where the operation command indicates that the IoT device is to receive the transmission data, wherein
the transmission data is data sent by the reading device after a specified duration from a time at which the WUS is sent.

18. The method of claim 17, wherein
the specified duration is configured by the reading device for the IoT device; or
the specified duration is predefined in a protocol.

19. The method of claim 17 or 18, wherein a minimum value of the specified duration is an upper limit of a duration from reception of the WUS by the IoT device to completion, via the main transceiver, of preparation for data reception.

20. A method for device wake-up, performed by a reading device and comprising:
sending a wake-up signal (WUS) to an internet of things (IoT) device, wherein the WUS is received by the IoT device via a wake-up receiver, and the WUS contains an operation command, so that the IoT device wakes up a main transceiver of the IoT device and forwards the operation command to the main transceiver for execution of the operation command.

21. The method of claim 20, wherein the WUS further contains a control field, wherein the control field is used to carry identification information of a device to be woken up by the WUS.

22. The method of claim 21, wherein the control field contains a control subfield and a sequence number subfield, wherein
the control subfield indicates an addressing mode for the WUS, wherein the addressing mode is group addressing or individual addressing; and
the sequence number subfield indicates an address sequence number corresponding to the addressing mode.

23. The method of claim 22, wherein address sequence numbers corresponding to different addressing modes have the same length or different lengths.

24. The method of claim 23, wherein in a case where the address sequence numbers corresponding to the different addressing modes have different lengths and a length of the address sequence number is less than a length of the sequence number subfield, bits other than the address sequence number in the sequence number subfield are filled with padding bits.

25. The method of any one of claims 20 to 24, wherein the WUS further contains a synchronization sequence, wherein the synchronization sequence is used by the wake-up receiver to perform frequency and time synchronization.

26. The method of claim 25, wherein
the synchronization sequence is a fixed binary sequence; or
the synchronization sequence is one of a plurality of fixed binary sequences.

27. The method of any one of claims 20 to 26, wherein the operation command indicates a purpose of waking up the main transceiver by the WUS.

28. The method of any one of claims 20 to 27, wherein different types of operation commands have the same length or different lengths.

29. The method of claim 28, wherein the operation command is carried in command field in the WUS; and
in a case where the different types of operation commands have different lengths and a length of the operation command is less than a length of the command field, bits other than the operation command in the command field are filled with padding bits.

30. The method of claim 29, wherein the command field further contains operation data for executing the operation command.

31. The method of any one of claims 20 to 30, wherein the WUS further contains a cyclic redundancy check (CRC), wherein the CRC is used to check information other than the CRC in the WUS.

32. The method of any one of claims 20 to 31, further comprising:
receiving feedback data sent by the main transceiver of the IoT device and corresponding to the operation command, and adjusting a transmission parameter to be sent to the IoT device.

33. The method of claim 32, wherein the transmission parameter comprises at least one of a transmission power, a data rate, or a modulation and coding scheme (MCS).

34. The method of claim 32, wherein the feedback data comprises data-packet-reception feedback information, wherein the data-packet-reception feedback information indicates whether the IoT device has successfully received *N* data packets sent by the reading device before the WUS, and *N* is an integer greater than or equal to 1.

35. The method of claim 34, wherein sequence numbers of the data packets increase sequentially, and the sequence numbers of the data packets are reset when a specified condition is met, wherein
the specified condition comprises:
a sequence number of a data packet sent by the reading device reaches a maximum value; or
the data-packet-reception feedback information indicates that the IoT device has successfully received the *N* data packets sent by the reading device before the WUS.

36. The method of any one of claims 20 to 35, further comprising:
in a case where the operation command indicates that the IoT device is to receive transmission data sent by the reading device, sending the transmission data to the IoT device after a specified duration from a time at which the WUS is sent.

37. The method of claim 36, wherein
the specified duration is configured by the reading device for the IoT device; or
the specified duration is predefined in a protocol.

38. The method of claim 36 or 37, wherein a minimum value of the specified duration is an upper limit of a duration required from reception of the WUS by the IoT device to completion, via the main transceiver, of preparation for data reception.

39. An apparatus for device wake-up, comprising:
a receiving module configured to receive, via a wake-up receiver of an internet of things (IoT) device, a wake-up signal (WUS), wherein the WUS contains an operation command;
a wake-up module configured to wake up a main transceiver of the IoT device; and
a forwarding module configured to forward the operation command to the main transceiver, so that the main transceiver executes the operation command.

40. The apparatus of claim 39, wherein the WUS further contains a control field, wherein the control field is used to carry identification information of a device to be woken up by the WUS; and
the wake-up module is configured to wake up the main transceiver in a case where the identification information of the device to be woken up by the WUS matches the IoT device.

41. The apparatus of claim 40, wherein the control field contains a control subfield and a sequence number subfield, wherein
the control subfield indicates an addressing mode for the WUS, wherein the addressing mode is group addressing or individual addressing; and
the sequence number subfield indicates an address sequence number corresponding to the addressing mode.

42. The apparatus of claim 41, wherein address sequence numbers corresponding to different addressing modes have the same length or different lengths.

43. The apparatus of claim 42, wherein in a case where the address sequence numbers corresponding to the different addressing modes have different lengths and a length of the address sequence number is less than a length of the sequence number subfield, bits other than the address sequence number in the sequence number subfield are filled with padding bits.

44. The apparatus of any one of claims 39 to 43, wherein the WUS further contains a synchronization sequence, wherein the synchronization sequence is used by the wake-up receiver to perform frequency and time synchronization.

45. The apparatus of claim 44, wherein
the synchronization sequence is a fixed binary sequence; or
the synchronization sequence is one of a plurality of fixed binary sequences.

46. The apparatus of any one of claims 39 to 45, wherein the operation command indicates a purpose of waking up the main transceiver by the WUS.

47. The apparatus of any one of claims 39 to 46, wherein different types of operation commands have the same length or different lengths.

48. The apparatus of claim 47, wherein the operation command is carried in command field in the WUS; and
in a case where the different types of operation commands have different lengths and a length of the operation command is less than a length of the command field, bits other than the operation command in the command field are filled with padding bits.

49. The apparatus of claim 48, wherein the command field further contains operation data for executing the operation command.

50. The apparatus of any one of claims 39 to 48, wherein the WUS further contains a cyclic redundancy check (CRC), wherein the CRC is used to check information other than the CRC in the WUS.

51. The apparatus of any one of claims 39 to 50, wherein the forwarding module is configured to:
write, via the wake-up receiver, the operation command into a command register, and set, via the wake-up receiver, an active flag bit of the command register; and
read, via the main transceiver, the operation command from the command register, and clear, via the main transceiver, the active flag bit of the command register.

52. The apparatus of any one of claims 39 to 51, further comprising:
a feedback data sending module configured to send, in response to the operation command having corresponding feedback data, the feedback data via the main transceiver.

53. The apparatus of claim 52, wherein the feedback data comprises data-packet-reception feedback information, wherein the data-packet-reception feedback information indicates whether the IoT device has successfully received *N* data packets sent by a reading device before the WUS, and *N* is an integer greater than or equal to 1.

54. The apparatus of claim 51, wherein sequence numbers of the data packets sent by the reading device increase sequentially, and the sequence numbers of the data packets sent by the reading device are reset when a specified condition is met, wherein
the specified condition comprises:
a sequence number of a data packet sent by the reading device reaches a maximum value; or
the data-packet-reception feedback information indicates that the IoT device has successfully received the *N* data packets sent by the reading device before the WUS.

55. The apparatus of any one of claims 39 to 54, further comprising:
a transmission data receiving module configured to receive, via the main receiver, transmission data sent by a reading device in a case where the operation command indicates that the IoT device is to receive the transmission data, wherein
the transmission data is data sent by the reading device after a specified duration from a time at which the WUS is sent.

56. The apparatus of claim 55, wherein
the specified duration is configured by the reading device for the IoT device; or
the specified duration is predefined in a protocol.

57. The apparatus of claim 55 or 56, wherein a minimum value of the specified duration is an upper limit of a duration required from reception of the WUS by the IoT device to completion, via the main transceiver, of preparation for data reception.

58. An apparatus for device wake-up, comprising:
a sending module configured to send a wake-up signal (WUS) to an internet of things (IoT) device, wherein the WUS is received by the IoT device via a wake-up receiver, and the WUS contains an operation command, so that the IoT device wakes up a main transceiver of the IoT device and forwards the operation command to the main transceiver for execution of the operation command.

59. The apparatus of claim 58, wherein the WUS further contains control field, wherein the control field is used to carry identification information of a device to be woken up by the WUS.

60. The apparatus of claim 59, wherein the control field contains a control subfield and a sequence number subfield, wherein
the control subfield indicates an addressing mode for the WUS, wherein the addressing mode is group addressing or individual addressing; and
the sequence number subfield indicates an address sequence number corresponding to the addressing mode.

61. The apparatus of claim 60, wherein address sequence numbers corresponding to different addressing modes have the same length or different lengths.

62. The apparatus of claim 61, wherein in a case where the address sequence numbers corresponding to the different addressing modes have different lengths and a length of the address sequence number is less than a length of the sequence number subfield, bits other than the address sequence number in the sequence number subfield are filled with padding bits.

63. The apparatus of any one of claims 58 to 62, wherein the WUS further contains a synchronization sequence, wherein the synchronization sequence is used by the wake-up receiver to perform frequency and time synchronization.

64. The apparatus of claim 63, wherein
the synchronization sequence is a fixed binary sequence; or
the synchronization sequence is one of a plurality of fixed binary sequences.

65. The apparatus of any one of claims 58 to 64, wherein the operation command indicates a purpose of waking up the main transceiver by the WUS.

66. The apparatus of any one of claims 58 to 65, wherein different types of operation commands have the same length or different lengths.

67. The apparatus of claim 66, wherein the operation command is carried in command field in the WUS; and
in a case where the different types of operation commands have different lengths and a length of the operation command is less than a length of the command field, bits other than the operation command in the command field are filled with padding bits.

68. The apparatus of claim 67, wherein the command field further contains operation data for executing the operation command.

69. The apparatus of any one of claims 58 to 68, wherein the WUS further contains a cyclic redundancy check (CRC), wherein the CRC is used to check information other than the CRC in the WUS.

70. The apparatus of any one of claims 58 to 69, further comprising:
an adjustment module configured to receive feedback data sent by the main transceiver of the IoT device and corresponding to the operation command, and adjust a transmission parameter to be sent to the IoT device.

71. The apparatus of claim 70, wherein the transmission parameter comprises at least one of a transmission power, a data rate, or a modulation and coding scheme (MCS).

72. The apparatus of claim 70, wherein the feedback data comprises data-packet-reception feedback information, wherein the data-packet-reception feedback information indicates whether the IoT device has successfully received *N* data packets sent by the reading device before the WUS, and *N* is an integer greater than or equal to 1.

73. The apparatus of claim 72, wherein sequence numbers of the data packets increase sequentially, and the sequence numbers of the data packets are reset when a specified condition is met, wherein
the specified condition comprises:
a sequence number of a data packet sent by the reading device reaches a maximum value; or
the data-packet-reception feedback information indicates that the IoT device has successfully received the *N* data packets sent by the reading device before the WUS.

74. The apparatus of any one of claims 58 to 73, further comprising:
a data sending module configured to, in a case where the operation command indicates that the IoT device is to receive transmission data sent by the reading device, send the transmission data to the IoT device after a specified duration from a time at which the WUS is sent.

75. The apparatus of claim 74, wherein
the specified duration is configured by the reading device for the IoT device; or
the specified duration is predefined in a protocol.

76. The apparatus of claim 74 or 75, wherein a minimum value of the specified duration is an upper limit of a duration required from reception of the WUS by the IoT device to when completion, via the main transceiver, of preparation for data reception.

77. An ambient power-enabled internet of things (ambient IoT) device, comprising:
a transceiver;
a memory configured to store a computer program; and
a processor configured to execute the computer program, to cause the ambient IoT device to implement the method for device wake-up of any one of claims 1 to 19.

78. A reading device, comprising:
a transceiver;
a memory configured to store a computer program; and
a processor configured to execute the computer program, to cause the reading device to implement the method for device wake-up of any one of claims 20 to 38.

79. A computer-readable storage medium configured to store a computer program that is executed by a processor of a communication device, to cause the communication device to implement the method for device wake-up of any one of claims 1 to 38.

80. A chip, comprising an integrated circuit and an application program, wherein the chip is configured to execute in a communication device, to cause the communication device to perform the method for signal processing of any one of claims 1 to 38.

81. A computer program product comprising computer instructions stored in a computer-readable storage medium, and a processor of a communication device being configured to read the computer instructions from the computer-readable storage medium and execute the computer instructions, to cause the communication device to perform the method for device wake-up of any one of claims 1 to 38.

82. A computer program being executed by a processor of a communication device, to cause the communication device to implement the method for device wake-up of any one of claims 1 to 38.
